(19) Europäisches Patentamt
European Patent Office
Office européen des brevets

(11) EP 1 179 565 A1

(12) **DEMANDE DE BREVET EUROPEEN**

(43) Date de publication:
**13.02.2002 Bulletin 2002/07**

(51) Int Cl.[7]: **C08L 53/00**, C08F 297/08

(21) Numéro de dépôt: **01202893.2**

(22) Date de dépôt: **27.07.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **07.08.2000 FR 0010414**

(71) Demandeur: **SOLVAY POLYOLEFINS EUROPE - BELGIUM (Société Anonyme)**
**1050 Bruxelles (BE)**

(72) Inventeurs:
- **François, Philippe**
  **1490 Court-Saint-Etienne (BE)**
- **Momtaz, Ardechir**
  **1180 Bruxelles (BE)**
- **Radhakrishnan, Karunakaran**
  **33600 Pessac (FR)**
- **Cramail, Henri**
  **33350 Sainte Terre (FR)**
- **Deffieux, Alain**
  **33000 Bordeaux (FR)**

(74) Mandataire: **Destryker, Elise Martine**
**Solvay Polyolefins Europe-Belgium (Société Anonyme) Département de la Propriété Industrielle 310, rue de Ransbeek**
**1120 Bruxelles (BE)**

(54) **Composition à base de polymer d'olefine, procédé pour son obtention et utilisation**

(57) Composition à base de copolymère à blocs d'oléfines dont les chaînes polymères sont constituées d'au moins un segment (A) dérivé du propylène et pouvant contenir jusqu'à 100 unités monomériques dérivées d'éthylène et/ou d'une α-oléfine en C4-C8 pour 100 unités monomériques dérivées de propylène et un segment (B) dérivé de l'éthylène et pouvant contenir jusqu'à 100 unités monomériques dérivées d'α-oléfine(s) en C3-C8 pour 100 unités monomériques dérivées d'éthylène, au moins un des segments (A) ou (B) ayant une masse moléculaire moyenne en poids d'au moins 200.000 daltons.

Procédé pour son obtention et utilisation comme agent compatibilisant.

EP 1 179 565 A1

## Description

La présente invention concerne des compositions à base de polymères d'oléfines et plus particulièrement à base de copolymères à blocs dont les chaînes polymères comprennent au moins un segment polypropylène et un segment polyéthylène. La présente invention concerne également un procédé de préparation de ces compositions ainsi que leur utilisation comme agent de compatibilisation des polyoléfines.

Il est connu que les catalyseurs Ziegler-Natta traditionnels ne permettent pas la synthèse de polymères vivants parce que les réactions de terminaison et de transfert de chaînes sont compétitives avec celles de propagation. De ce fait, les copolymères dits à blocs, obtenus par polymérisations successives de monomères différents à l'intervention de ces catalyseurs, ne sont pas de vrais copolymères à blocs dans lesquels les chaînes polymères sont constituées de segments successifs de composition différente mais sont constitués essentiellement de mélange des chaînes polymères de compositions différentes obtenues au cours des étapes de polymérisation successives.

Toutefois, dans des conditions bien définies, les catalyseurs Ziegler-Natta solubles peuvent donner lieu à de la polymérisation vivante et donc à des vrais copolymères à blocs. C'est ainsi que le document EP-0513216 décrit des copolymères à blocs obtenus, à basse température, au moyen de catalyseurs métallocènes ioniques. Cependant, les produits obtenus contiennent moins de 70 % en poids desdits copolymères à blocs et ont des masses moléculaires relativement faibles.

Il est également connu que des catalyseurs à base d'α-di-immine nickel peuvent donner naissance à des polymères vivants et à des vrais copolymères à blocs. C'est ainsi que les documents US-A-5891963 et J. Am. Chem. Soc. 1996, 118, p. 11664-11665 décrivent des copolymères à blocs dont les chaînes polymères sont constituées de segments polypropylènes et de segments polyhexènes ou polyoctènes. Toutefois, ces copolymères sont obtenus avec des rendements relativement faibles et présentent un coût élevé lié à la nature des comonomères mis en oeuvre. En outre, la présence de résidus de monomères lourds dans le polymère final rend difficile la séparation du polymère de son milieu de préparation.

Il s'avère donc intéressant de mettre au point des vrais copolymères à blocs dérivés de propylène et d'éthylène qui sont économiquement rentables et qui ne présentent pas les désavantages des vrais copolymères à blocs décrits dans l'art antérieur.

La présente invention vise à satisfaire un tel objectif.

A cet effet, la présente invention concerne une composition à base de copolymère à blocs d'oléfines dont les chaînes polymères sont constituées d'au moins un segment (A) dérivé du propylène et pouvant contenir jusqu'à 100 unités monomériques dérivées d'éthylène et/ou d'une α-oléfine en C4-C8 pour 100 unités monomériques dérivées de propylène et un segment (B) dérivé de l'éthylène et pouvant contenir jusqu'à 100 unités monomériques dérivées d'α-oléfine(s) en C3-C8 pour 100 unités monomériques dérivées d'éthylène, au moins un des segments (A) ou (B) ayant une masse moléculaire moyenne en poids d'au moins 200.000 daltons.

Les compositions selon l'invention comprennent en général au moins 70 % en poids de copolymère à blocs et plus particulièrement au moins 75 % en poids de copolymères à blocs. Des compositions contenant au moins 85 % en poids de copolymère à blocs conviennent bien. La teneur maximale en copolymère à blocs dans les compositions selon l'invention n'est pas critique. On remarque cependant que cette teneur maximale est le plus souvent inférieure à 98 % en poids, plus particulièrement inférieure à 95 % en poids. Des compositions constituées essentiellement de copolymères à blocs rentrent également dans le cadre de la présente invention. Par compositions constituées essentiellement de copolymères à blocs, on entend des compositions ne contenant pas d'autre constituant polymère dérivé d'α-oléfine que le ou les copolymères à blocs définis ci-avant.

Dans le cadre de la présente invention, on entend par teneur en copolymère à blocs des compositions, la quantité de polymère insoluble dans le toluène à température ambiante telle que mesurée ci-après en rapport avec les exemples illustrant l'invention.

La fraction des compositions selon l'invention soluble dans le toluène est le plus souvent constituée d'un mélange des chaînes polymères dérivées du propylène et de chaînes polymères dérivées d'éthylène.

Le copolymère à blocs selon l'invention peut contenir plusieurs segments (A) et/ou (B) de composition identique ou différente. Des copolymères à blocs de structure A-B, A-B-A ou B-A-B conviennent particulièrement bien. Parmi ceux-ci, les copolymères à blocs de structure A-B, et A-B-A donnent des résultats avantageux. Les copolymères à blocs de structure A-B sont particulièrement préférés.

Les proportions relatives des segments (A) et (B) ne sont pas critiques. On préfère toutefois des copolymères à blocs dans lesquels le rapport molaire du (ou des) segment(s) (A) au(x) segment(s) (B) est de 0,1:10 à 10:0,1, plus particulièrement de 1:10 à 10:1. Les copolymères à blocs dont les segments (A) et (B) sont dans des rapports molaires 40:60 à 60:40 donnent les meilleurs résultats.

Il va de soi que les chaînes polymères des copolymères à blocs peuvent contenir d'autres segments polymères tels que, à titre d'exemples non limitatifs, des segments de polyoléfines différents des segments (A) et (B). Plus particulièrement ces segments peuvent être des segments de polymère d'α-oléfines contenant de 4 à 10 atomes de

carbone. A titre d'exemples de tels segments, on peut citer des segments de polybutène, de polyhexène ou de polyoctène. La teneur de ces segments est le plus souvent inférieure à 50 % en poids par rapport au poids du copolymère à blocs. Des teneurs inférieures à 20 % en poids et plus particulièrement inférieures à 10 % en poids donnant les meilleurs résultats.

Une des caractéristiques essentielles des compositions selon l'invention est la masse moléculaire particulièrement élevée des copolymères à blocs. On remarque en effet que les copolymères à blocs sont tels que la masse moléculaire moyenne d'au moins un des segments (A) ou (B) est d'au moins 200.000 daltons, plus particulièrement d'au moins 220.000 daltons. Les copolymères à blocs dont la masse moléculaire moyenne en poids d'au moins un segment est de 250.000 daltons donnent les meilleurs résultats. De préférence la masse moléculaire moyenne en poids de l'autre segment est d'au moins 100.000 daltons et plus particulièrement d'au moins 150.000 daltons. Les copolymères à blocs préférés sont tels que la masse moléculaire moyenne en poids des segments (A) et (B) est d'au plus 1.500.000, de préférence d'au plus 1.200.000 et plus particulièrement d'au plus 1.000.000 daltons.

La distribution des masses moléculaires des copolymères à blocs est également extrêmement étroite. En effet, cette distribution, caractérisée par le rapport de la masse moléculaire moyenne en poids à la masse moléculaire moyenne en nombre, est le plus souvent inférieure à 2,2 et plus particulièrement inférieure à 2.

Par ailleurs, lorsque les compositions selon l'invention sont obtenues à l'intervention du système catalytique décrit ci-après, on remarque le plus souvent que les segments polypropylènes (A) peuvent présenter une structure différente de celle des chaînes polypropylène obtenues avec les systèmes catalytiques traditionnels. Cette structure est caractérisée par un nombre de branchements $-CH_3$ provenant du propylène inférieur au nombre de groupements $-CH_2-$ provenant du propylène. En particulier, lorsque le segment (A) comprend uniquement des unités dérivées du propylène, on remarque que le rapport du nombre de branchements $-CH_3$ au nombre de groupements $-CH_2-$ présents dans la chaîne polymère est le plus souvent inférieur à 1 et plus particulièrement de l'ordre de 400:1000 à 800:1000. Des rapports supérieurs à 800:1000 et plus particulièrement supérieurs ou égaux à environ 950:1000 pouvant être obtenus lorsque la polymérisation est effectuée à basse température (inférieure à 0°C).

Lorsque les compositions selon l'invention sont obtenues à l'intervention des systèmes catalytiques décrits ci-après, on remarque le plus souvent que le segment polyéthylène (B) présente un nombre relativement élevé de branchements. Lorsque le segment (B) ne contient que des unités monomériques dérivées de l'éthylène, on remarque que ce nombre de branchements est le plus souvent de 10 à 150 pour 1000 groupements $-CH_2-$. Des segments polyéthylènes présentant moins de 10 branchements pour 1000 groupements $-CH_2-$ étant obtenus à basse température (inférieure à 0°C).

Des compositions donnant de bons résultats sont les compositions à base de copolymère à blocs ayant une structure diblocs A-B dans laquelle le segment (A) contient moins de 50, plus particulièrement moins de 25 unités monomériques dérivées d'éthylène et/ou d'une $\alpha$-oléfine en C4-C8 pour 100 unités monomériques dérivées de propylène. Des compositions particulièrement préférées sont telles que le segment (B) contient moins de 50, avantageusement moins de 25 unités monomériques dérivées d'$\alpha$-oléfine(s) en C3-C8 pour 100 unités monomériques dérivées d'éthylène. Ces copolymères à blocs sont en outre le plus souvent tels que le rapport en poids du segment (A) au segment (B) est de 10:100 à 100:10, plus particulièrement de 40:60 à 60:40. Des copolymères à blocs particulièrement avantageux étant les copolymères A-B dont la masse moléculaire moyenne en poids du segment (A) est de 200.000 à 600.000 daltons et la masse moléculaire moyenne en poids du segment (B) est préférentiellement de 150.000 à 800.000 daltons. Ces compositions particulières contiennent avantageusement au moins 85 % en poids de copolymère à blocs.

Les copolymères à blocs selon l'invention sont le plus souvent caractérisés par une température de fusion d'au moins 80°C, avantageusement d'au moins 120 °C. La température de fusion est en outre généralement d'au plus 160 °C. Des températures de fusion d'au plus 140 °C donnant de bons résultats.

La température de fusion de ces copolymères à blocs peut être sensiblement différente des valeurs mentionnées ci-avant lorsqu'ils contiennent un ou plusieurs segments différents des segments (A) et (B).

La température de fusion des compositions selon l'invention dépend de leur teneur en copolymères à blocs et de la nature des autres composants.

Les compositions selon l'invention présentent un compromis de propriétés particulièrement avantageux. Elles permettent en outre de compatibiliser efficacement les mélanges de polymères et plus particulièrement les mélanges de polypropylène et de polyéthylène obtenus par catalyse Ziegler-Natta traditionnelle ou à l'intervention de catalyseurs métallocène.

Les compositions selon la présente invention peuvent être utilisées telles qu'elles. Elles peuvent également contenir divers additifs, tels que, à titre d'exemples non limitatifs, des agents stabilisants, des agents nucléants, des antiacides, des antioxydants, des colorants organiques ou minéraux, des matières de charge, tels que du talc ou des fibres de verre. Les compositions selon l'invention peuvent aussi être utilisées comme constituant (par exemple comme mélange maître) pour produire ultérieurement d'autres compositions.

Les compositions selon l'invention peuvent être mises en oeuvre par tous les procédés classiques de transformation des matières thermoplastiques tels que par exemples par moulage, extrusion, injection et sur tous les appareillages et dispositif utilisés à cet effet.

Les compositions selon la présente invention sont généralement obtenues par polymérisation en au moins deux étapes successives à l'intervention de catalyseurs à base de complexe di-imminique de métaux des groupes 8 à 10 du tableau périodique répondant à la formule générale

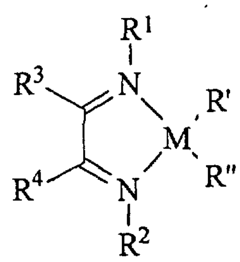

dans laquelle

- M représente un métal des groupes 8 à 10 du tableau périodique,
- R' et R", identiques ou différents, sont chacun un hydrogène, un halogène, un groupe hydrocarboné contenant de 1 à 35 atomes de carbone, un groupe alcoxy, un groupe amino, un groupe hydrocarboné phosphoré ou un groupe hydrocarboné contenant du silicium ayant de 1 à 20 atomes de carbone,
- $R^1$ et $R^2$ sont chacun indépendamment l'un de l'autre des groupements hydrocarbonés tels que l'atome de carbone lié à l'azote soit en outre lié à au moins deux autres atomes de carbone, et
- $R^3$ et $R^4$ sont chacun indépendamment l'un de l'autre un hydrogène, un groupe hydrocarboné, substitué ou non, les deux groupes $R^3$ et $R^4$ pouvant être reliés entre eux pour former un cycle.

Parmi ces composés, les catalyseurs préférés sont généralement tels que

- M est le Ni, le Fe, le Co ou le Pd,
- R' et R" sont chacun un halogène ou un groupe hydrocarboné de 1 à 10 atomes de carbone,
- $R^1$ et $R^2$ sont chacun indépendamment l'un de l'autre des groupements hydrocarbonés contenant de 3 à 30 atomes de carbone tels que l'atome de carbone lié à l'azote soit lié à au moins deux autres atomes de carbone,
- $R^3$ et $R^4$ sont chacun indépendamment l'un de l'autre des groupes contenant de 1 à 30 atomes de carbone pouvant être reliés entre eux pour former un cycle.

Les catalyseurs préférés sont choisis parmi les composés de nickel. Le di-(2,6-iPr-Ph)diazobutane-(1,8 naphtène)$NiBr_2$] et le di-(2,6-iPr-Ph)diazobutane-$(CH_3)_2NiBr_2$ donnent de particulièrement bons résultats.

Ces catalyseurs sont le plus souvent utilisés conjointement avec des activateurs choisis préférentiellement parmi les composés organoaluminiques tels que par exemples les aluminoxanes et les agents ionisants. Par aluminoxanes, on entend les composés répondant aux formules $R_2AlO\text{-}(AlRO)_n\text{-}AlR_2$ et

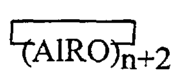

dans lesquelles n est un nombre de 1 à 40 et R est un groupe alkyle ou aryle contenant de 1 à 12 atomes de carbone ou un atome d'hydrogène. Les composés préférés de ce type sont les méthyl-, éthyl- ou isobutyl-aluminoxanes.

Par agents ionisants, on entend désigner les composés comprenant une première partie qui présente les propriétés d'un acide de Lewis et qui est capable d'ioniser le catalyseur et une deuxième partie, qui est inerte vis-à-vis du catalyseur ionisé et qui est capable de le stabiliser. A titre d'exemple de tels composés, on peut citer le tétrakis (pentafluorophényl)borate de triphénylcarbénium, le tétrakis(pentafluorophényl)borate de N,N-diméthylanilinium, le tétrakis(pentafluorophényl)borate de tri-(n-butyl)amonium, le tri(pentafluorophényl)bore, le triphénylbore, le triméthylbore, le tri(triméthylsilyl)borate et les organoboroxines.

Les activateurs préférés selon la présente invention sont les aluminoxanes.

La quantité de composé d'activateur dépend du type d'activateur utilisé. Lorsque l'activateur est un aluminoxane, la quantité d'activateur est le plus souvent telle que le rapport atomique entre l'aluminium de l'aluminoxane

et le métal du catalyseur est de 0,1 à 40.000. De préférence, ce rapport est d'au moins 1, plus particulièrement d'au moins 2. Le plus souvent, l'activateur est mis en oeuvre dans des quantités telles que le rapport atomique aluminium/ métal est d'au plus 10.000 et plus particulièrement d'au plus 5.000. Lorsque l'activateur est un agent ionisant, le catalyseur est le plus souvent mis en oeuvre dans des quantités telles que le rapport molaire du catalyseur et de l'activateur est de 0,01 à 100. De préférence, ce rapport est d'au moins 0,5 et plus particulièrement d'au plus 25. Des rapports d'environ 1 à environ 5 donnent de particulièrement bons résultats.

Les compositions selon l'invention sont obtenues en au moins deux étapes de polymérisation successives au cours desquelles sont obtenus les segments (A) et (B). L'ordre des étapes n'est pas critique. On préfère toutefois polymériser un mélange à base de propylène lors de la première étape.

Il va de soi que des chaînes polymères autres que celles du copolymère à blocs peuvent être formées au cours de ces étapes.

Les étapes de polymérisation peuvent être réalisées selon n'importe quel procédé connu, en solution ou en suspension dans un diluant hydrocarboné, en suspension dans le, ou un des monomères maintenus à l'état liquide ou encore en phase gazeuse. La température de polymérisation est le plus souvent de -70 °C à + 80 °C. L'utilisation de basses températures favorisant la polymérisation vivante, on préfère effectuer la polymérisation à une température inférieure à 20 °C, plus particulièrement inférieure à 0 °C. Des températures de -25°C à 0°C conviennent bien.

La pression est de préférence choisie entre la pression atmosphérique et 80 $10^5$ Pa, plus particulièrement entre 5 et 40 $10^5$ Pa. La durée des différentes étapes n'est pas critique. Elle est généralement choisie en fonction de la masse moléculaire souhaitée pour les segments (A) et (B). La durée de chacune des étapes est le plus souvent comprise entre 1 minute et dix heures. Des durées supérieures à 5 minutes et plus particulièrement supérieure à 10 minutes conviennent bien. De préférence la durée maximale de chacune des étapes n'excède pas 5 heures de préférence pas 2 heures.

Il peut également s'avérer préférable d'introduire dans le milieu de polymérisation un ou plusieurs composés organoaluminiques permettant d'améliorer l'activité du catalyseur et/ou de capter les poisons de la réaction de polymérisation. Ces composés peuvent être des aluminoxanes tels que décrits ci-avant ou des composés organoaluminiques répondant à la formule $R_m\,AlX_{3-m}$ ou $R_m\,AlOR^7{}_{3-m}$ dans lesquelles R est un radical tel que défini ci-avant, X est un atome d'halogène, $R^7$ est un radical hydrocarboné contenant de 1 à 20 atomes de carbone et m est un nombre tel que $0<m\leq 3$. Des composés organoaluminiques préférés sont les trialkylaluminiums, les halogénures d'alkylaluminium et les aluminoxanes.

Les exemples suivants servent à illustrer l'invention. Les méthodes de mesure des grandeurs mentionnées dans les exemples, les unités exprimant ces grandeurs et la signification des symboles utilisés dans ces exemples sont explicitées ci-dessous.

La masse moléculaire moyenne en poids (Mw) et la masse moléculaire moyenne en nombre sont obtenues par chromatographie d'exclusion stérique à partir d'une solution de polymère dans le trichlorobenzène à 0,5 g/l, au moyen d'une colonne polystyrénique Waters Styragel HMW 6E commercialisée par Waters Co Ldt.

La distribution des masses moléculaires (Mw/Mn) est caractérisée par le rapport de la masse moléculaire moyenne en poids à la masse moléculaire moyenne en nombre obtenue comme décrit ci-avant.

CPB = teneur en copolymère à blocs des compositions selon l'invention exprimée en % en poids et déterminée à partir du poids de la fraction insoluble dans le toluène mesurée à température ambiante (25°C) par ajout de 250 ml de toluène à 4g de composition sous une agitation magnétique pendant une durée de 24 heures. La suspension est ensuite filtrée sur papier WHATMAN 113 qui est ensuite séché à température ambiante (25°C) jusqu'à l'obtention d'un poids constant.

[A] = proportion de segment (A) dans le copolymère à blocs exprimée en % molaire et déterminée par Résonance Magnétique Nucléaire $^1$H. Le spectre RMN est pris à partir d'une solution du polymère à 120°C dans du 1,1,2,2-tétrachloréthane à partir des bandes correspondant aux groupements $-CH_3$ à environ 0,25 ppm et des bandes $-CH_2-$ à environ 0,7 ppm

[B] = proportion de segment (B) dans le copolymère à blocs obtenue par différence à partir de la valeur [A]

Tm = Température de fusion du copolymère à blocs mesurée par analyse thermographique différentielle (DSC) au moyen d'un appareil ELMER DSC SYSTEM commercialisé par la firme Perkin Elmer

<u>Exemples 1 à 4</u>

a) Préparation du catalyseur à base de complexe di-imminique

<u>Synthèse de di-(2,6-iPr-Ph)diazobutane - (1,8 naphtène)</u>

Dans un becher de 100 ml, on introduit 1,71 g (9,39 mmole) de acenaphthaquinone et on y ajoute 50 ml de

méthanol suivis de 3,6 ml (19,2 mmole) de 2,6-diisopropyl aniline et de 1 ml d'acide formique.
La réaction est maintenue sous agitation durant 12 heures et le précipité est filtré et lavé au méthanol. Sa purification par recristallisation dans le dichlorométhane permet d'obtenir la diimine avec un rendement de 70 % (3,5 g).

Synthèse du di-(2,6-iPr-Ph)diazobutane - (1,8 naphtène)$NiBr_2$

1 g (3,25 mmole) de (1,2-dimethoxyethane)$NiBr_2$ et 2 g (4 mmole) de la diimine sont introduits dans un becher de 250 ml.
100 ml de dichlorométhane sont ajoutés et le mélange est maintenu sous agitation durant 24 heures. Le solvant est alors éliminé sous vide et les résidus sont lavés au diéthylether. Le produit final (masse moléculaire 718,71) est isolé sous la forme d'une poudre jaune avec un rendement de 63 % (1,9 g). Le spectre RMN proton montre les groupements $-CH_3$ entres 0,18 et 0.38 ppm et les groupements $CH_2$ entre 0,6 et 0,8 ppm.

b) Conditions générales de polymérisation

Dans un réacteur de 350 ml, préalablement conditionné sous azote, 300 ml de toluène sont ajoutés. Le réacteur est tiré sous vide durant 5 minutes puis connecté à un cylindre de 5 litres pressurisé avec du propylène. La pression initiale de propylène dans le cylindre est telle que la pression moyenne de l'ensemble est d'environ 3 bars (exemple 1) ou environ 2 bars (exemples 2 à 4), le réacteur étant maintenu à -10°C.
Après 30 minutes, un mélange de 5 ml de méthylaluminoxane 10% (Witco Eurecene T 5010) et de 5 ml de toluène est ajouté et la polymérisation est démarrée par introduction de 12 mg (16.6 μmole) de di-(2,6-iPr-Ph)diazobutane-(1,8 naphtène)$NiBr_2$ en solution dans 15 ml de toluène. La température est maintenue à -10°C durant toute la durée de préparation du premier bloc. Ensuite, le réacteur est déconnecté du cylindre et le propylène est dégazé sous vide pendant 5 minutes.
Le réacteur est alors connecté à un autre cylindre de 5 litres pressurisé à une pression d'éthylène telle que la pression moyenne du système est d'environ 2 bars à -10°C. Le système est maintenu dans ces conditions pendant la durée de polymérisation du deuxième bloc. La polymérisation est arrêtée par dégazage de l'éthylène. Le réacteur est vidé dans un becher contenant 100 ml de éthanol.
300 ml de toluène sont introduits dans le réacteur et ce dernier est maintenu sous agitation pendant deux heures à 100°C sous 5 bars d'azote avant d'être vidé dans le même becher. Un large excès d'éthanol et 5 ml d'HCl concentré dilué dans 50 ml d'eau sont ajoutés dans les 600 ml de toluène afin de précipiter le polymère et de détruire le catalyseur et l'activateur présent. Le polymère précipité est filtré et séché jusqu'à poids constant.

| Exemple | 1 | 2 | 3 | 4 |
|---|---|---|---|---|
| 1er bloc | | | | |
| Durée(min) | 60 | 90 | 90 | 90 |
| 2me bloc | | | | |
| Durée | 15 | 15 | 15 | 15 |
| CPB (%) | 94 | 90 | 95 | -- |
| Mw (dalton) | 620000 | 552000 | 872000 | 923000 |
| Mw/Mn | 1.5 | 1.9 | 1.7 | 2.0 |
| Tm | 112 | 119 | 123 | 131 |
| [A] | | 37 | 35 | 37 |
| [B] | | 63 | 65 | 63 |

**Revendications**

1. Composition à base de copolymère à blocs d'oléfines dont les chaînes polymères sont constituées d'au moins un segment (A) dérivé du propylène et pouvant contenir jusqu'à 100 unités monomériques dérivées d'éthylène et/ou d'une α-oléfine en C4-C8 pour 100 unités monomériques dérivées de propylène et un segment (B) dérivé de l'éthylène et pouvant contenir jusqu'à 100 unités monomériques dérivées d'α-oléfine(s) en C3-C8 pour 100 unités monomériques dérivées d'éthylène, au moins un des segments (A) ou (B) ayant une masse moléculaire moyenne en poids d'au moins 200.000 daltons.

**2.** Composition selon la revendication 1, comprenant au moins 70 % en poids de copolymère à blocs.

**3.** Composition selon les revendications 1 ou 2, dans laquelle le copolymère à blocs a une structure A-B ou A-B-A.

**4.** Composition selon l'une quelconque des revendications 1 à 3, dans laquelle le rapport en molaire du (ou des) segment(s) (A) au(x) segment(s) (B) du copolymère à blocs est de 40:60 à 60:40.

**5.** Composition selon l'une quelconque des revendications 1 à 4, dans laquelle le segment (A) contient un nombre de branchements $-CH_3$ provenant du propylène inférieur au nombre de groupements $-CH_2-$ provenant du propylène.

**6.** Composition selon l'une quelconque des revendications 1 à 5, dans laquelle le segment (B) ne contient que des unités monomériques dérivées de l'éthylène et contient de 10 à 150 branchements pour 1000 groupements $-CH_2-$.

**7.** Composition selon l'une quelconque des revendications 1 à 6, susceptible d'être obtenue par polymérisation en au moins deux étapes successives à l'intervention de catalyseurs à base de complexe di-imminique de métaux des groupes 8 à 10 du tableau périodique répondant à la formule générale

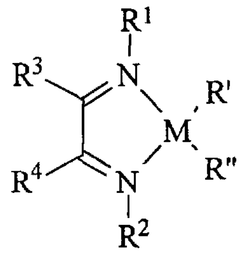

dans laquelle

- M représente un métal des groupes 8 à 10 du tableau périodique,
- R' et R", identiques ou différents, sont chacun un hydrogène, un halogène, un groupe hydrocarboné contenant de 1 à 35 atomes de carbone, un groupe alcoxy, un groupe amino, un groupe hydrocarboné phosphoré ou un groupe hydrocarboné contenant du silicium ayant de 1 à 20 atomes de carbone,
- $R^1$ et $R^2$ sont chacun indépendamment l'un de l'autre des groupements hydrocarbonés tels que l'atome de carbone lié à l'azote soit en outre lié à au moins deux autres atomes de carbone, et
- $R^3$ et $R^4$ sont chacun indépendamment l'un de l'autre un hydrogène, un groupe hydrocarboné, substitué ou non, les deux groupes $R^3$ et $R^4$ pouvant être reliés entre eux pour former un cycle.

**8.** Utilisation d'une composition selon l'une quelconque des revendications 1 à 6 comme agent compatibilisant des mélanges de polymères.

Office européen des brevets

# RAPPORT DE RECHERCHE EUROPEENNE

Numéro de la demande
EP 01 20 2893

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br><br>Y | EP 0 962 474 A (JAPAN POLYCHEM CORP)<br>8 décembre 1999 (1999-12-08)<br>* Exemple 4 (aussi en Table 2) ; revendications 1-14 ; page 4, ligne 53-57 ; page 5, ligne 28 - page 10, ligne 32 ; page 12, ligne 34-39 ; page 15, ligne 40 - page 16,ligne 23 ;page 2,ligne 5-10*<br>* page 2, ligne 15-20 * | 1-5,8<br><br>6,7 | C08L53/00<br>C08F297/08 |
| X<br><br><br>Y | WO 99 61525 A (DSM NV ;AELMANS NICOLAAS JOHANNA JOZEF (NL); BULTERS MARCUS JOHANN)<br>2 décembre 1999 (1999-12-02)<br>* page 9, ligne 29 - page 10, ligne 5 ; revendication 1 ; page 4, ligne 2-6 ; page 5, ligne 21 - page 7, ligne 16 ; exemples* | 1-5,8<br><br><br>7 | |
| X | US 5 391 629 A (GADKARI AVINASH C ET AL)<br>21 février 1995 (1995-02-21)<br>* revendications 1-11 ; Table 1-10 ; Exemples 1-12 *<br>* colonne 7, ligne 28 - colonne 8, ligne 20 * | 1-5,8 | **DOMAINES TECHNIQUES RECHERCHES (Int.Cl.7)**<br>C08F<br>C08L<br>C09J<br>C09D |
| X | WO 00 23489 A (CHISSO PETROCHEMICAL CORP ;JAPAN SCIENCE & TECH CORP (JP); MATSUKA)<br>27 avril 2000 (2000-04-27)<br>* abrégé * | 1-5,8 | |
| X | EP 0 534 776 A (SUMITOMO CHEMICAL CO)<br>31 mars 1993 (1993-03-31)<br>* page 9, ligne 49 ; revendications 1,5-7 ; abrégé ; page 2, ligne 30-38 *<br>* page 4, ligne 22,23 * | 1-5,8 | |

-/--

Le présent rapport a été établi pour toutes les revendications

| Lieu de la recherche | Date d'achèvement de la recherche | Examinateur |
|---|---|---|
| LA HAYE | 30 octobre 2001 | Hammond, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numéro de la demande
EP 01 20 2893

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 3 929 932 A (CASTAGNA EUGENE G) 30 décembre 1975 (1975-12-30) * Exemple 1 ; revendications 1,5-9 ; colonne 2, ligne 60-66 * * colonne 4, ligne 50-66 * --- | 1-5,8 | |
| D,Y | US 5 891 963 A (ARTHUR SAMUEL DAVID ET AL) 6 avril 1999 (1999-04-06) * revendications 1-11 * * colonne 1, ligne 20 - colonne 31, ligne 52; exemples 1-537 * --- | 6,7 | |
| Y | US 5 852 145 A (FELDMAN JERALD ET AL) 22 décembre 1998 (1998-12-22) * abrégé ; revendications 1-19 * * colonne 8, ligne 3-6 * --- | 7 | |
| A | WO 98 55519 A (JAUNIAUX MARC ;SOLVAY (BE)) 10 décembre 1998 (1998-12-10) * revendication 12 ; page 9, ligne 23-35* * page 2, ligne 31-33 * --- | 1-8 | DOMAINES TECHNIQUES RECHERCHES (Int.Cl.7) |
| A | US 4 820 775 A (SHIGA AKINOBU ET AL) 11 avril 1989 (1989-04-11) * revendication 1 ; colonne 17, ligne 50-53 ; colonne 12, ligne 1-6 ; colonne 10, ligne 40 - colonne 11, ligne 68 * * colonne 12, ligne 44-50 * ----- | 1-8 | |

Le présent rapport a été établi pour toutes les revendications

| Lieu de la recherche | Date d'achèvement de la recherche | Examinateur |
|---|---|---|
| LA HAYE | 30 octobre 2001 | Hammond, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 01 20 2893

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

30-10-2001

| Document brevet cité au rapport de recherche | Date de publication | Membre(s) de la famille de brevet(s) | Date de publication |
|---|---|---|---|
| EP 0962474 A | 08-12-1999 | JP 11349650 A | 21-12-1999 |
| | | JP 11349746 A | 21-12-1999 |
| | | EP 0962474 A1 | 08-12-1999 |
| | | US 2001014719 A1 | 16-08-2001 |
| WO 9961525 A | 02-12-1999 | AU 4292299 A | 13-12-1999 |
| | | BR 9910759 A | 13-02-2001 |
| | | CN 1311810 T | 05-09-2001 |
| | | EP 1082390 A1 | 14-03-2001 |
| | | WO 9961525 A1 | 02-12-1999 |
| US 5391629 A | 21-02-1995 | CA 2158868 A1 | 29-09-1994 |
| | | EP 0738290 A1 | 23-10-1996 |
| | | JP 9500150 T | 07-01-1997 |
| | | WO 9421700 A1 | 29-09-1994 |
| | | AU 7324491 A | 03-09-1991 |
| | | CA 2075035 A1 | 10-08-1991 |
| | | CS 9100334 A2 | 13-08-1991 |
| | | DE 69128028 D1 | 27-11-1997 |
| | | DE 69128028 T2 | 10-06-1998 |
| | | EP 0513216 A1 | 19-11-1992 |
| | | ES 2110437 T3 | 16-02-1998 |
| | | JP 5503546 T | 10-06-1993 |
| | | PT 96743 A | 31-10-1991 |
| | | WO 9112285 A1 | 22-08-1991 |
| | | AT 146798 T | 15-01-1997 |
| | | AU 610863 B2 | 30-05-1991 |
| | | AU 1294588 A | 24-08-1988 |
| | | BR 8805025 A | 17-10-1989 |
| | | CA 1338687 A1 | 29-10-1996 |
| | | CA 1340136 A1 | 17-11-1998 |
| | | DE 3855727 D1 | 06-02-1997 |
| | | DK 548988 A | 30-11-1988 |
| | | EP 0277003 A1 | 03-08-1988 |
| | | EP 0478913 A1 | 08-04-1992 |
| | | ES 2095273 T3 | 16-02-1997 |
| | | FI 884486 A | 29-09-1988 |
| | | HU 52791 A2 | 28-08-1990 |
| | | IL 85098 A | 29-03-1992 |
| | | JP 2880176 B2 | 05-04-1999 |
| | | JP 1501950 T | 06-07-1989 |
| | | NO 884295 A | 28-09-1988 |
| | | PL 270366 A1 | 17-04-1989 |
| | | PL 276385 A1 | 24-07-1989 |
| | | PT 86671 A | 30-01-1989 |
| | | RU 2074770 C1 | 10-03-1997 |

EPO FORM P0460

Pour tout renseignement concernant cette annexe : voir Journal Officiel de l'Office européen des brevets, No.12/82

## ANNEXE AU RAPPORT DE RECHERCHE EUROPEENNE RELATIF A LA DEMANDE DE BREVET EUROPEEN NO. EP 01 20 2893

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-10-2001

| Document brevet cité au rapport de recherche | Date de publication | Membre(s) de la famille de brevet(s) | Date de publication |
|---|---|---|---|
| US 5391629 A | | US 5384299 A | 24-01-1995 |
| | | US 5408017 A | 18-04-1995 |
| | | WO 8805792 A1 | 11-08-1988 |
| | | US 5407884 A | 18-04-1995 |
| | | US 5621126 A | 15-04-1997 |
| | | US 6232420 B1 | 15-05-2001 |
| | | US 5483014 A | 09-01-1996 |
| | | US 5470927 A | 28-11-1995 |
| | | US 6121395 A | 19-09-2000 |
| | | US 5599761 A | 04-02-1997 |
| | | US 6245706 B1 | 12-06-2001 |
| | | US 5198401 A | 30-03-1993 |
| | | US 5278119 A | 11-01-1994 |
| WO 0023489 A | 27-04-2000 | WO 0023489 A1 | 27-04-2000 |
| EP 0534776 A | 31-03-1993 | CA 2079200 A1 | 28-03-1993 |
| | | EP 0534776 A1 | 31-03-1993 |
| | | JP 2785607 B2 | 13-08-1998 |
| | | JP 5194685 A | 03-08-1993 |
| US 3929932 A | 30-12-1975 | BE 812845 A1 | 26-09-1974 |
| | | CA 1029492 A1 | 11-04-1978 |
| | | DE 2414508 A1 | 10-10-1974 |
| | | FR 2223405 A1 | 25-10-1974 |
| | | GB 1451272 A | 29-09-1976 |
| | | JP 49128955 A | 10-12-1974 |
| | | US 3937758 A | 10-02-1976 |
| US 5891963 A | 06-04-1999 | US 5880241 A | 09-03-1999 |
| | | US 6218493 B1 | 17-04-2001 |
| | | US 5880323 A | 09-03-1999 |
| | | US 5866663 A | 02-02-1999 |
| | | US 6034259 A | 07-03-2000 |
| | | US 5886224 A | 23-03-1999 |
| | | US 6140439 A | 31-10-2000 |
| | | US 5916989 A | 29-06-1999 |
| | | US 6107422 A | 22-08-2000 |
| | | AU 729324 B2 | 01-02-2001 |
| | | AU 5020896 A | 14-08-1996 |
| | | BR 9607485 A | 23-12-1997 |
| | | CA 2211108 A1 | 01-08-1996 |
| | | CN 1181089 A | 06-05-1998 |
| | | CZ 9702351 A3 | 17-12-1997 |
| | | EP 0805826 A2 | 12-11-1997 |
| | | FI 973096 A | 23-09-1997 |

EPO FORM P0460

Pour tout renseignement concernant cette annexe : voir Journal Officiel de l'Office européen des brevets, No.12/82

## ANNEXE AU RAPPORT DE RECHERCHE EUROPEENNE RELATIF A LA DEMANDE DE BREVET EUROPEEN NO.

EP 01 20 2893

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-10-2001

| Document brevet cité au rapport de recherche | | Date de publication | Membre(s) de la famille de brevet(s) | | | Date de publication |
|---|---|---|---|---|---|---|
| US 5891963 | A | | JP | 10513489 | T | 22-12-1998 |
| | | | NO | 973310 | A | 23-09-1997 |
| | | | PL | 322446 | A1 | 02-02-1998 |
| | | | TR | 9700681 | T1 | 21-02-1998 |
| | | | WO | 9623010 | A2 | 01-08-1996 |
| US 5852145 | A | 22-12-1998 | US | 6002034 | A | 14-12-1999 |
| | | | AU | 3961797 | A | 10-02-1998 |
| | | | BR | 9710881 | A | 08-09-1999 |
| | | | CA | 2259582 | A1 | 29-01-1998 |
| | | | CN | 1226256 | A | 18-08-1999 |
| | | | EP | 0914354 | A1 | 12-05-1999 |
| | | | JP | 2000515195 | T | 14-11-2000 |
| | | | WO | 9803559 | A1 | 29-01-1998 |
| WO 9855519 | A | 10-12-1998 | AU | 8020898 | A | 21-12-1998 |
| | | | WO | 9855519 | A1 | 10-12-1998 |
| | | | EP | 0986589 | A1 | 22-03-2000 |
| | | | US | 6303709 | B1 | 16-10-2001 |
| | | | ZA | 9804699 | A | 07-12-1998 |
| US 4820775 | A | 11-04-1989 | JP | 7025860 | B | 22-03-1995 |
| | | | JP | 61287917 | A | 18-12-1986 |
| | | | CA | 1259722 | A1 | 19-09-1989 |
| | | | DE | 3683538 | D1 | 05-03-1992 |
| | | | EP | 0202946 | A2 | 26-11-1986 |
| | | | HU | 44048 | A2 | 28-01-1988 |
| | | | SG | 61392 | G | 04-09-1992 |

EPO FORM P0460

Pour tout renseignement concernant cette annexe : voir Journal Officiel de l'Office européen des brevets, No.12/82